# EUROPÄISCHE PATENTSCHRIFT

(11) **EP 1 205 505 B1**
(45) Veröffentlichungstag und Bekanntmachung des Hinweises auf die Patenterteilung: **30.11.2005**
(21) Anmeldenummer: 01122999.4
(22) Anmeldetag: 26.09.2001
(51) Int. Cl.: C08G 77/06, C07F 7/08

(54) **Kontinuierliches Verfahren zur Herstellung von Organoalkoxysiloxanen**
Continous process for preparing organoalkoxysiloxanes
Procédé en continu pour la fabrication d'organoalkoxysiloxanes

(30) Priorität: 14.11.2000 DE 10056343
(43) Veröffentlichungstag der Anmeldung: 15.05.2002
(73) Patentinhaber: Degussa AG, 40474 Düsseldorf (DE)
(72) Erfinder: Standke, Burkhard, Dr., 79540 Lörrach (DE); Horn, Michael, Dr., 79618 Rheinfelden (DE)

(56) Entgegenhaltungen:
- EP-A- 0 650 968
- GB-A- 674 137
- US-A- 3 792 071
- US-A- 4 226 793
- US-A- 4 506 087

## Beschreibung

Die vorliegende Erfindung betrifft ein spezielles Verfahren zur Herstellung von Organoalkoxysiloxanen, Gemische von Organoalkoxysiloxanen, die nach diesem Verfahren erhältlich sind, sowie die Verwendung solcher Gemische.

Es ist lange bekannt, ein Organoalkoxysilan durch Veresterung eines Organochlorsilans mit einem Alkohol herzustellen.

Es ist ferner bekannt, Orthokieselsäuretetraalkylester oder deren Oligomere durch Veresterung aus Tetrachlorsilan oder aus oligomeren Chlorsiloxanen herzustellen DE 27 44 726 C2. Bei diesem Verfahren kann gleichzeitig mit der Veresterung oder im Anschluß an die Veresterung eine Oligomerisierung durch definierte Wasserzusätze durchgeführt werden.

Aufgrund des unterschiedlichen Hydrolyse- bzw. Kondensationsverhaltens von monomerem Edukt und den dabei entstehenden Folgeprodukten ist die Reaktionsführung zur gezielten Herstellung oligomerer Kieselsäureester äußerst schwierig, insbesondere wenn angestrebt ist, Veresterung, Hydrolyse und Kondensation gleichzeitig bzw. kontinuierlich und großtechnisch zu betreiben.

Darüber hinaus sollen so erhaltene Systeme möglichst lagerstabil sein, d. h., ihre physikalischen sowie chemischen Eigenschaften, wie Oligomerenverteilung und Viskosität, möglichst lange beizubehalten.

DE 28 09 871 C2 offenbart ein Verfahren zur partiellen Hydrolyse von Orthokieselsäure-tetra-(alkoxyalkyl)-ester, wobei man die Gesamtmenge an Wasser, die zur gezielten Teilhydrolyse erforderlich ist, bereits zu Beginn der Umsetzung mit dem Ester vermischt.

EP 0 518 057 lehrt ein Verfahren zur gezielten Herstellung von Organoalkoxysilanen durch Kondensation oder Cokondensation von Vinyl- und/oder Alkylalkoxysilanen in Gegenwart eines Katalysators, wobei die berechnete Wassermenge in Lösung der 0,2- bis 8fachen Gewichtsmenge an Methanol oder Ethanol eingesetzt wird.

Ferner beschreibt EP 0 814 110 A1 (O.Z. 5063) ein Verfahren zur diskontinuierlichen Herstellung von C₃- bis C₁₈-Alkyltrialkoxysiloxanen durch gezielte Kondensation entsprechender Alkylalkoxysilane in Gegenwart von Chlorwasserstoff (HCI), wobei man mehr als 1 Mol Wasser pro Mol Silicium zur Hydrolyse bzw. Kondensation des Alkoxysilans verwendet.

EP 0 579 453 A2 lehrt ein Verfahren zur Herstellung von Alkylalkoxysiloxanen, insbesondere auf Basis von Isobutyltrimethoxysilan (IBTMO), wobei für die gezielte Hydrolyse 0,1 bis 0,6 Mol Wasser pro Mol Alkoxysilan eingesetzt werden. Hierbei entstehen alkoholhaltige Gemische, die einen hohen Anteil an Silanmonomer, d. h. Edukt enthalten, wodurch das Produkt bei Applikation einen hohen Anteil an flüchtigem Monomer aufweist und darüber hinaus einen niedrigen Flammpunkt besitzt.

Weiterhin ist aus J. Organometallic Chem. Bd. 489 (1995) eine diskontinuierliche Methode zur Hydrolyse von Isopropyltrimethoxysilan zu entnehmen.

US 5 112 393 (= WO 92/06101) offenbart lösemittelfreie Organoalkoxysiloxane mit 2 bis 9 Si-Einheiten zur wasserabweisenden Ausstattung von mineralischen Baustoffen, wobei dem Siloxan zur Verbesserung der abweisenden Eigenschaften fluororganische Verbindungen zugesetzt werden können. Als Organogruppen sind dem US-Patent 5112393 u. a. C₁- bis C₃₀-Alkyl/Cycloalkyl/Arylalkyl/Alkaryl oder deren Mischungen, ferner olefinische bzw. mit Heteroatomen oder Fluoratomen substituierte Organogruppen zu entnehmen. Insbesondere werden Siloxane mit C₄-bis C₈-Alkylgruppen und einem Oligomerisierungsgrad von 2 bis 4 hervorgehoben, wobei 1,3-di-n-Octyl-1,1,3,3-tetramethoxydisiloxan und 1,3-di-n-Octyl-1,1,3,3-tetraethoxydisiloxan als bevorzugt herausgestellt werden. Auch deren Herstellung erfolgt diskontinuierlich. Darüber hinaus ist die gezielte Herstellung dieser Disiloxane aufwendig und teuer.

Weiterhin ist aus US 5 543 173 eine Methode zur gezielten Hydrolyse von Alkoxysilanen bekannt, wobei das Produkt einen erheblichen Anteil an Hydrolysealkohol bzw. deutliche Mengen an Lösemittel, wie Toluol, Metylisobutylketon (MIBK), aufweist. Als Edukte offenbart US 5 543 173 Organoalkoxysilane mit Organogruppen, wie Aminoalkyl, Diaminoalkyl, beispielsweise N-2-Aminoethyl-3-aminopropyl, Vinyl, C₆- bis C₂₀-Alkyl, beispielsweise Methyl, Ethyl, i-Propyl, n-Butyl, insbesondere Octyl, Halogenalkyl, Methacryloxyalkyl oder Mercaptoalkyl. Auch hier werden Alkoxysilane eingesetzt, die in einem gesonderten Verfahren durch Veresterung der jeweiligen Chlorsilane mit einem Alkohol erhältlich sind. Solche diskontinuierlichen, über mehrere Verarbeitungsstufen durchgeführte Verfahren sind in der Regel aufwendig und kostenintensiv.

Es ist ferner hervorzuheben, daß jedes solcher Organoalkoxysilane einschließlich entsprechender oligomerer Siloxane ein anderes Hydrolyse- bzw. Kondensationsverhalten besitzt und daher auch die Durchführung solcher Verfahren im Produktionsmaßstab erheblich erschwert. Verfahren zur Kontinuierlichen Herstellung von Organoalkoxysilanen sind aus EP 0 650 968 A1, GB 674 137 A und US 4 506 087 A bekannt.

Der vorliegenden Erfindung lag die Aufgabe zugrunde, ein möglichst wirtschaftliches Verfahren zur kontinuierlichen Herstellung von Organoalkoxysiloxanen bereitzustellen, die einen mittleren Oligomerisierungsgrad von 2 bis 30 aufweisen.

Die gestellte Aufgabe wird erfindungsgemäß entsprechend den Angaben der Patentansprüche gelöst.

Überraschenderweise wurde gefunden, daß man in einfacher und wirtschaftlicher Weise Organoalkoxysiloxane aus einem Organochlorsilan oder aus einem Gemisch von Chlorsilanen, einer definierten Menge Wasser und einem Alkohol in einem kontinuierlichen Verfahren herstellen kann, wenn man in einer ersten Verfahrensstufe, beispielsweise einem Rührkessel oder einer Reaktionskolonne, die Komponenten (i) Organotrichlorsilan oder ein Gemisch aus Organotrichlorsilanen, vorzugsweise Alkyltrichlorsilane, insbesondere n-Propyltrichlorsilan und/oder Vinyltrichlorsilan, oder ein Gemisch aus mindestens einem Organotrichlorsilan und Tetrachlorsilan, (ii) Wasser, geeigneterweise vollentsalztes Wasser, und (iii) Alkohol, vorzugsweise Methanol und/oder Ethanol, in einem molaren Verhältnis (i): (ii): (iii) von 1 **:** (0,59 bis 0,95) : (0,5 bis 100), vorzugsweise 1 : (≥ 0,6 bis 0,9) : (1 bis 3), besonders vorzugsweise 1 **:** (0,65 bis 0,85): (1 bis 3), vorteilhaft unter Durchmischung, zusammenbringt, bei einer Temperatur von 0 bis 150°C, vorzugsweise von 20 bis 70 °C, besonders bevorzugt bei 40 bis 60 °C, reagieren läßt, gleichzeitig über die Gasphase HCI aus dem System entfernt (Abgas) und das Rohprodukt nach einer mittleren Verweilzeit von 0,5 bis 180 Minuten, vorzugsweise 1 bis 60 Minuten, besonders vorzugsweise 4 bis 30 Minuten, gegebenenfalls über einen Vorwärmer, in die Reaktions-Destillationskolonne der zweiten Verfahrensstufe überführt, um die Reaktion auf der Kolonne zu vervollständigen, vorzugsweise dabei eine zusätzliche, d. h. weitere Menge an Alkohol in einem molaren Verhältnis (i) : (iii) von 1 : (0,1 bis 100), vorzugsweise 1 : (0,5 bis 10), besonders vorzugsweise 1 : (1 bis 3), einspeist, hier als Kopfprodukt Alkohol und HCI abführt und die Organoalkoxysiloxane als Sumpfprodukt, d. h. als Konzentrat in Form eines Gemischs, gewinnt, wobei man in der ersten Stufe die Edukte in einer Menge aufgibt, wie man Produkt aus der zweiten Stufe entnimmt bzw. Abgas, wie HCI und geringe Mengen an Chloralkyl, abführt. Die Sumpftemperatur der Reaktions-Destillationskolonne beträgt geeigneterweise 50 bis 200 °C, vorzugsweise 100 bis 180 °C, besonders vorzugsweise 150 bis 170 °C.

Nach dem vorliegenden Verfahren kann man in einfacher und besonders wirtschaftlicher Weise Organoalkoxysiloxangemische vorteilhaft in kontinuierlicher Fahrweise herstellen. Insbesondere ist das erfindungsgemäße Verfahren für die großtechnische Anwendung geeignet.

Gegenstand der vorliegenden Erfindung ist daher ein Verfahren zur kontinuierlichen Herstellung eines Gemisches von Organoalkoxysiloxanen der allgemeinen Formel I 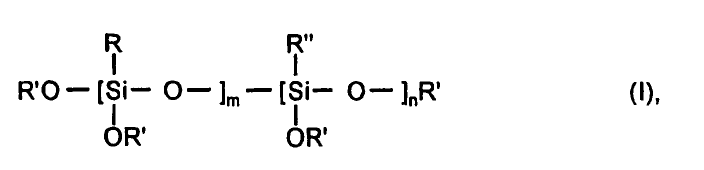 worin Gruppen R und R" gleich oder verschieden sind und Methyl, Ethyl, Vinyl, n-Propyl, i-Propyl, n-Butyl, n-Pentyl, i-Pentyl, n-Hexyl, i-Hexyl, n-Heptyl, i-Heptyl, n-Octyl, i-Octyl, Hexadecyl, Octadecyl oder Alkoxy, d. h. beispielsweise Methoxy oder Ethoxy, bedeuten, R' eine Methyl- oder Ethylgruppe oder gegebenenfalls ein Wasserstoffatom darstellt, n und m gleich oder verschieden sind und eine Zahl von 0 bis 20 darstellen, mit der Maßgabe (n+m) ≥ 2,
indem man in einer ersten Verfahrensstufe die Komponenten (i) Organotrichlorsilan oder ein Gemisch aus Organotrichlorsilanen oder ein Gemisch aus mindestens einem Organotrichlorsilan und Tetrachlorsilan, (ii) Wasser und (iii) Alkohol, in einem molaren Verhältnis (i) : (ii) : (iii) von 1 : (0,59 bis 0,95) : (0,5 bis 100) zusammenbringt, bei einer Temperatur von 0 bis 150 °C reagieren läßt, gleichzeitig Chlorwasserstoff aus dem System entfernt und Rohprodukt nach einer mittleren Verweilzeit von 0,5 bis 180 Minuten anteilig in die Reaktions-Destillationskolonne der zweiten Verfahrensstufe überführt, hier flüchtige Komponenten als Kopfprodukt abführt und die Organoalkoxysiloxane als Sumpfprodukt erhält, wobei die Reaktions-Destillationskolonne der zweiten Verfahrensstufe bei einer Sumpftemperatur von 50 bis 200 °C betrieben wird und die Organosiloxane einen mittleren Oligomerisierungsgrad von 2 bis 30 aufweisen.

Gegenstand der vorliegenden Erfindung sind ferner Gemische linearer, cyclischer und/oder netzartiger Organoalkoxysiloxane gemäß Formel I, die nach dem erfindungsgemäßen Verfahren erhältlich sind. Unter linearen, cyclischen und/oder netzartigen Organoalkoxysiloxanen sollen hier Strukturen mit einem mittleren Oligomerisierungsgrad von 2 bis 30, vorzugsweise von 3 bis 8, besonders bevorzugt von 4 bis 6, verstanden werden.

Darüber hinaus kann das als Sumpfprodukt nach dem vorliegenden, kontinuierlichen Verfahren erhältliche Gemisch aus Organoalkoxysiloxanen gegebenenfalls einen geringen bzw. noch meßbaren Anteil monomeres Organoalkoxysilan enthalten.

Vorzugsweise setzt man beim erfindungsgemäßen Verfahren als Chlorsilane Tetrachlorsilan, Methyltrichlorsilan, Vinyltrichlorsilan (VTCS), Ethyltrichlorsilan, n-Propyltrichlorsilan (n-PTCS), i-Propyltrichlorsilan (i-PTCS), n-Butyltrichlorsilan (n-BTCS), Pentyltrichlorsilan, Hexyltrichlorsilan, Heptyltrichlorsilan, n-Octyltrichlorsilan (n-OCTCS), i-Octyltrichlorsilan (i-OCTCS), Hexadecyltrichlorsilan sowie Octadecyltrichlorsilan ein.

Ferner wird als Komponente (iii) Methanol oder Ethanol bevorzugt eingesetzt.

Dabei werden im erfindungsgemäßen Verfahren die Komponenten (i), (ii) und (iii) in der ersten Verfahrensstufe vorzugsweise von 1 : (≥ 0,6 bis 0,9) : (1 bis 3), insbesondere in einem molaren Verhältnis von 1 : (0,8 bis 0,85) : (1,5 bis 2,5) eingesetzt.

Die mittlere Verweilzeit der Komponenten in der erfindungsgemäßen ersten Verfahrensstufe beträgt 0,5 bis 180 Minuten, vorzugsweise 1 bis 60 Minuten, besonders vorzugsweise 4 bis 30 Minuten, wobei die erste Verfahrensstufe geeigneterweise bei einer Temperatur von 20 bis 70 °C, insbesondere bei 40 bis 60 °C betrieben wird.

Nach der mittleren Verweilzeit ist die Reaktion in der Regel soweit fortgeschritten, um anteilig, d. h. kontinuierlich Rohprodukt aus der ersten Verfahrensstufe in die Reaktions-Destillationskolonne der zweiten Verfahrensstufe zu überführen. Dabei kann man das Rohprodukt aus der ersten Verfahrensstufe vor Eintritt in die zweite Verfahrensstufe über einen Vorwärmer führen.

Es ist vorteilhaft, wenn man das Rohprodukt aus der ersten Verfahrensstufe der oberen Hälfte der Reaktions-Destillationskolonne zuführt. Jedoch kann man auch das Rohprodukt der ersten Stufe dem unteren Teil der Kolonne der zweiten Stufe zuführen.

Im Hinblick auf eine möglichst vollständige Veresterung ist es beim erfindungsgemäßen Verfahren ferner von Vorteil, wenn man in den unteren Teil der Reaktions-Destillationskolonne der zweiten Verfahrensstufe zusätzlich Alkohol in einem molaren Verhältnis von der Komponenten (i) : (iii) von 1 : (0,1 bis 100) einspeist.

Dabei fällt der beim vorliegenden Verfahren im Überschuß eingesetzte Alkohol geeigneterweise in der zweiten Verfahrensstufe des erfindungsgemäßen Verfahrens am Kolonnenkopf als Alkoholfraktion an.

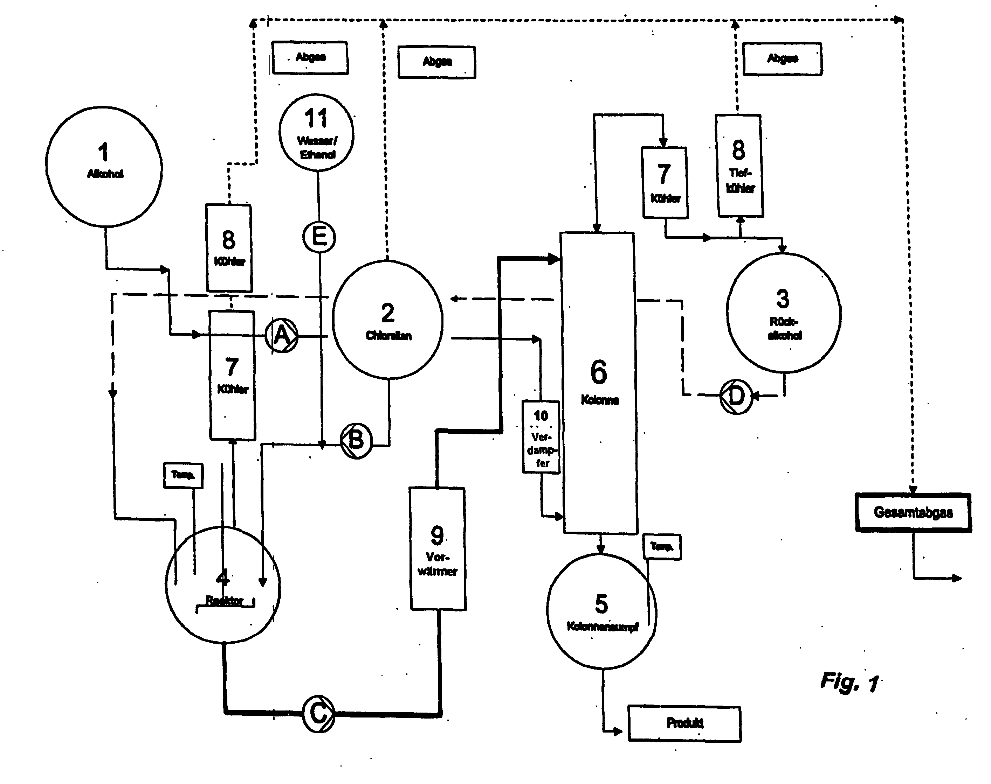

Figur 1 gibt das Fließschema einer bevorzugten Ausführungsform der vorliegenden Erfindung wieder.

Im allgemeinen führt man das erfindungsgemäße Verfahren derart aus, daß man die Komponenten (i), (ii) und (iii) (vgl. beispielhaft Figur 1: **1**, **2**, **11**) wohl dosiert dem Reaktor **4** der ersten Verfahrensstufe zuführt und bei einer Reaktionstemperatur von 0 bis 150 °C unter guter Durchmischung reagieren läßt, wobei Rohprodukt nach einer mittleren Verweilzeit von 0,5 bis 180 Minuten aus dem Reaktor der ersten Stufe anteilig, d. h. kontinuierlich entnommen und entsprechend durch Komponenten (i), (ii) und (iii) ersetzt werden kann. Der üblicherweise im Überschuß eingesetzte Alkohol kann sowohl die Aufgabe einer Reaktionskomponente als auch die eines Reaktionsmediums übernehmen. Bei der Umsetzung in der ersten Reaktionsstufe entstehende HCI kann bei der Hydrolyse, Veresterung sowie Kondensation des vorliegenden Verfahrens in vorteilhafter Weise katalytisch wirken und wird in der Regel über die Gasphase als Abgas abgeführt. Das aus der ersten Stufe kontinuierlich entnommene Rohprodukt wird vorzugsweise über einen Vorwärmer **9** geführt und in die Reaktions-Destillationskolonne **6** der zweiten Verfahrensstufe überführt, wobei das gewünschte Produkt, d. h. das Gemisch aus Organoalkoxysiloxanen als Produkt aus dem Kolonnensumpf **5** entnommen und die produktfremden Komponenten im wesentlichen über den Kopf **7**, **8** der Kolonne abgeführt werden kann.

So kann in einer bevorzugten Ausführungsform des erfindungsgemäßen, kontinuierlichen Verfahrens das Rohprodukt aus der ersten Stufe in den oberen Teil der Reaktions-Destillationskolonne der zweiten Stufe geleitet und die zusätzliche Menge an Alkohol beispielsweise über den Verdampfer **10** in den unteren Teil der Reaktions-Destillationskolonne der zweiten Stufe eingespeist werden, wobei im Rohprodukt vorhandene Chlorsilane und Chlorsiloxane im Gegenstrom mit Alkohol unter Abspaltung von HCI reagieren können. Der in der zweiten Verfahrensstufe am Kolonnenkopf anfallende Alkohol 3, der je nach Reaktionsführung HCl, Organochloralkoxysilane, Organotrialkoxysilane oder entsprechende Siloxane enthalten kann, wird geeigneterweise nach Kondensation der Kolonne **6** der zweiten Verfahrensstufe und/oder als Edukt in den Reaktor **4** der ersten Verfahrensstufe zurückgeführt.

Das Sumpfprodukt aus der zweiten Verfahrensstufe des erfindungsgemäßen Verfahrens kann zusätzlich nachbehandelt werden. So kann man gegebenenfalls im Sumpfprodukt noch vorhandene monomere Organoalkoxysilane, Spuren von Alkohol oder Organochlorsilane beispielsweise über eine weitere, der Reaktions-Destillationskolonne nachgeschaltete Destillationseinheit oder über einen Dünnschichtverdampfer aus dem Produkt destillativ entfernen. Darüber hinaus sollten vorliegende Organoalkoxysiloxane der allgemeinen Formel I mindestens eine Gruppe R oder R" enthalten, welche von Alkoxy verschieden ist. Trüb- oder Schwebstoffe kann man geeigneterweise durch Filtration aus dem Produkt entfernen. Sollte eine Verringerung der Farbzahl des Produkts gewünscht sein, kann dies durch eine Behandlung des Produkts mit einem Absorptionsmittel, wie Aktivkohle oder Kieselsäure, erfolgen. Darüber hinaus kann man den Chloridgehalt des Organoalkoxysiloxangemischs durch Fällung mit Alkalien, wie Natriumalkoholate, Ammoniak oder Natron- bzw. Kalilauge, weiter gesenkt werden.

Besonders vorzugsweise stellt man nach dem erfindungsgemäßen Verfahren Gemische aus n-Propylmethoxysiloxanen, n-Propylethoxysiloxanen, Vinylethoxysiloxanen, Vinylmethoxysiloxanen oder entsprechend gemischte n-Propyl/Vinylsiloxancopolymere her, wobei diese Produkte sich insbesondere durch eine spezielle Zusammensetzung des Oligomerengemischs mit einem mittleren Oligomerisierungsgrad von 2 bis 30, vorzugsweise von 3 bis 8, besonders bevorzugt von 4 bis 6, auszeichnen, so wie es beispielsweise im Detail aus der deutschen Parallelanmeldung mit dem Titel "n-Propylethoxysiloxane, Verfahren zu deren Herstellung und deren Verwendung" hervorgeht. Es wird ausdrücklich darauf hingewiesen, daß der Inhalt der deutschen Parallelanmeldung mit dem Titel "n-Propylethoxysiloxane, Verfahren zu deren Herstellung und deren Verwendung" auch als Offenbarung der vorliegenden Anmeldung zu sehen ist.

Erfindungsgemäß erhaltene Gemische polykondensierter, vorzugsweise oligomerer Organoalkoxysilane sind in der Regel lösemittelfrei und mehr als 6 Monate lagerstabil und können vorteilhaft als Konzentrat, in verdünnter Form, beispielsweise als Lösung in Benzinkohlenwasserstoffen oder als alkoholische Lösung, vorzugsweise gelöst in Methanol, Ethanol und/oder in n- bzw. i-Propanol, oder in emulgierter Form, vorzugsweise als wäßrige Zubereitung sowohl in niedrigviskosem als auch in hochviskosem, pastösem Zustand, oder in wie auch immer gearteten Mitteln verwendet werden. So können erfindungsgemäße Organoalkoxysiloxangemische beispielsweise in einer wäßrigen und/oder alkoholischen Zubereitung unter Zusatz eines Verdickungsmittels zur Erzeugung pastöser Eigenschaften für die Behandlung von anorganischen Oberflächen, beispielsweise zur wasser-, öl-, schmutz- bzw. farbabweisenden oder korrosionverhindernden oder haftvermittelnden Ausstattung von Metall, Keramik, Baustoffen, Bauteilen und Bauwerken, wie Eisen, Stahl, Ziegel, Mauersteine, Naturstein, Beton, Kalksandstein, Marmor, Fliesen, Kunststein, Flachglas, Hohlglas, Verbundglas, Brücken, Dächer, Fassaden, um nur einige Beispiele zu nennen, verwendet werden.

Zudem können die erfindungsgemäß erhaltenen Siloxangemische für die Hydrophobierung und Oberflächenmodifizierung von Textilien, Leder, Zellulose- und Stärkeprodukten, für die Beschichtung von Glas- und Mineralfasern, zum Beispiel als Bindemittel oder als Zusatz zu Bindemittel, für die Oberflächenmodifizierung von Füllstoffen, für die Verbesserung der rheologischen Eigenschaften von Dispersionen und Emulsionen, als Haftvermittler, beispielsweise für die Verbesserung der Haftung organischer Polymere auf anorganischen Substraten, als Trennmittel, als Vernetzer oder als Zusatzstoff für Farben und Lacke verwendet werden.

Die vorliegende Erfindung wird durch die nachfolgenden Beispiele näher erläutert.

### Beispiele

### Beispiel 1

### Kontinuierliche Herstellung eines n-Propylethoxysiloxangemischs (VPS 9892)

### Beschreibung der Anlage

Versuchsapparatur, vgl. Figur 1:
**1** Vorlage Alkohol; 2-I-Glaskolben
**2** Vorlage Chlorsilan(gemisch); 1-I-Glaskolben
**3** Vorlage Rück-Alkohol; 100-ml-Tropftrichter
**4** Reaktor; 2-I-Doppelmantelkolben, Ölthermostat beheizt
**5** Kolonnensumpf; 2-I-Doppelmantelkolben, Ölthermostat beheizt
**6** Kolonne; Länge: 150 cm, 0: 28 mm, Füllung: Porzellansattelkörper 0 ca. 4 mm
**7** Intensivkühler; Länge: 55 cm
**8** Tiefkühler; Länge: 20 cm, mit Trockeneis/Isopropanol-Mischung gekühlt
**9** Vorwärmer; Doppelmantel-Glasgefäß mit V = ca. 40 ml, Ölthermostat beheizt
**10** Verdampfer; Doppelmantel-Glasgefäß mit V = ca. 20 ml, Ölthermostat beheizt
**11** Vorlage Wasser/Alkohol-Gemisch; 500-ml-Glaskolben

**A** PROMINENT-Membranpumpe "Gamma/4", Dosierleistung von 0,69 l/h
**B** PROMINENT-Membranpumpe "Gamma/4", Dosierleistung von 0,69 l/h
**C** PROMINENT-Membranpumpe "Gamma/4", Dosierleistung von 1,60 l/h
**D** PROMINENT-Membranpumpe "Gamma/4", Dosierleistung von 0,69 l/h
**E** PROMINENT-Membranpumpe "Gamma/4", Dosierleistung von 0,2 l/h

### Temperaturführung

T Heizkreislauf (HKL) für Reaktor: 70 °C; T (Reaktor) ca. 50 °C
   T HKL Verdampfer: 150 °C; T (Verdampfer) ca. 120 °C
   T HKL Kolonnensumpf + 1. Schuß: 180 °C; T (Kolonnensumpf) ca. 160 °C
   T HKL 2. + 3. Schuß: 100 °C; T (am 3. Kolonnenschuß) ca. 89 °C
   T HKL Vorwärmer: 50 °C

### Beschreibung der Ausführung

Chlorsilane werden zusammen mit Wasser und Rückethanol in den angegebenen Dosiermengen in den Reaktor (beheizt, gerührt) dosiert. Die Dosierung aus dem Reaktor über den Vorwärmer auf die Kolonne wird so eingestellt, daß sich im Reaktor eine Flüssigkeitsmenge von ca. 25 bis 200 ml befindet. Gleichzeitig wird Ethanol über den Verdampfer in der angegebenen Dosierung in den unteren Teil der Kolonne eingespeist. Das entstehende Abgas (HCI) wird abgeführt. Überschüssiges Ethanol und Chlorsilane (incl. Chloralkoxysilane und -siloxane sowie gelöste HCI) werden kondensiert und als Rückethanol dem Reaktor zugeführt. Aus dem Kolonnensumpf wird kontinuierlich Produkt entnommen, so daß sich ein konstanter Flüssigkeitsspiegel im Kolonnensumpf einstellt.

### Edukte

PTCS (n-Propyltrichlorsilan, Reinheit = 99,3 FI-%)
Destilliertes Wasser (Reinheit = 98,5 FI-%)

### Dosierung

| | |
|---|---|
| PTCS | ca. 1,45 -1,65 mol/h |
| Ethanol | ca. 2,2 - 3,4 mol/h |
| Rückethanol | ca. 3,0 - 3,4 mol/h |
| Destilliertes Wasser | ca. 0,98 -1,28 mol/h |

### Nachbehandlung

Das Produkt enthält noch geringe Mengen Chlorid, beispielsweise in Form von n-Propylethoxychlorsiloxanen. Die Zugabe der stöchiometrischen Menge ethanolischer Natronlauge führt zur Ausfällung von NaCI, welches über eine Drucknutsche abfiltriert werden kann. Überschüssiges Ethanol wird am Rotationsverdampfer abgezogen. Dadurch steigt der Flammpunkt des Produkts.

### Charakterisierung des Produkts (Werte in Klammern ohne Nachbehandlung)

| | |
|---|---|
| Flammpunkt | 89 °C (40 °C) |
| SiO₂-Gehalt | 41,3 % w/w |
| Viskosität | 4,8 mPa s |
| Hydrolysierbares Chlorid | < 10 ppm (461 mg/kg) |
| Farbzahl | 10 Apha |

### Beispiel 2

### Kontinuierliche Herstellung eines Vinylethoxysiloxangemischs (DS 6498)

### Beschreibung der Anlage

Versuchsapparatur wie in Beispiel 1 beschrieben.

### Temperaturführung

T Heizkreislauf (HKL) für Reaktor: 70 °C; T (Reaktor) ca. 50 °C
T HKL Verdampfer: 150 °C; T (Verdampfer) ca. 120 °C
T HKL Kolonnensumpf + 1. Schuß: 180 °C; T (Kolonnensumpf) ca. 160 °C
T HKL 2. + 3. Schuß: 100 °C; T (am 3. Kolonnenschuß) ca. 87 °C
T HKL Vorwärmer: 50 °C

### Beschreibung der Ausführung

Wie Beispiel 1 mit folgendem Unterschied:

### Edukte

VTCS (Vinyltrichlorsilan, Reinheit = 99,1 FI-%)
Ethanol (Reinheit = 98,5 FI-%)
Destilliertes Wasser (wird im G emisch 1 : 1 mit Ethanol zudosiert)

### Dosierung

| | |
|---|---|
| VTCS | ca. 1,4 mol/h |
| Ethanol | ca. 1,8 mol/h |
| Rückethanol | ca. 3,4 mol/h |
| Destilliertes Wasser | ca. 1,25 mol/h |

### Nachbehandlung

Das Produkt enthält noch geringe Mengen Chlorid, beispielsweise in Form von Vinylethoxychlorsiloxanen. Die Zugabe der stöchiometrischen Menge ethanolischer Natronlauge führt zur Ausfällung von NaCI, welches über eine Drucknutsche abfiltriert werden kann. Überschüssiges Ethanol wird am Rotationsverdampfer abgezogen. Dadurch steigt der Flammpunkt des Produkts.

### Charakterisierung des Produkts (ohne Nachbehandlung)

| | |
|---|---|
| SiO ₂ | 47,1 % |
| Viskosität | 4,9 mPa s |
| Hydrolysierbares Chlorid | 18 mg/kg |
| Farbzahl | 45 |
| Dichte | 1,030 g/cm ³ |

### Beispiel 3

### Kontinuierliche Synthese von n-Propylvinylethoxysiloxan-Cokondensat (DS 6598)

### Beschreibung der Anlage

Versuchsapparatur wie in Beispiel 1 beschrieben.

### Temperaturführung

T Heizkreislauf (HKL) für Reaktor: 70 °C; T (Reaktor) ca. 50 °C
T HKL Verdampfer: 150 °C; T (Verdampfer) ca. 112 °C
T HKL Kolonnensumpf + 1. Schuß: 180 °C; T (Kolonnensumpf) ca. 168 °C
T HKL 2. + 3. Schuß: 100 °C; T (am 3. Kolonnenschuß) ca. 85 °C
T HKL Vorwärmer: 50 °C

### Beschreibung der Ausführung

Wie Beispiel 1 mit folgendem Unterschied:

### Edukte

VTCS (Vinyltrichlorsilan, Reinheit = 99,1 FI-%)
PTCS (n-Propyltrichlorsilan, Reinheit = 99,3 FI-%)
Ethanol (Reinheit = 98,5 FI-%)
Destilliertes Wasser (wird im Gemisch 1 : 1 mit Ethanol zudosiert)
VTCS und PTCS werden im Gemisch zugegeben, molares Mischungsverhältnis: 1 mol VTCS : 0,95 mol PTCS

### Dosierung

| | |
|---|---|
| Chlorsilangemisch | ca. 2,0 mol/h |
| Ethanol | ca.3,0 mol/h |
| Rückethanol | ca. 4,5 mol/h |
| Destilliertes Wasser | ca. 1,65 mol/h |

### Nachbehandlung

Das Produkt enthält noch geringe Mengen Chlorid, beispielsweise in Form von Vinyl/n-Propylethoxychlorsiloxanen. Die Zugabe der stöchiometrischen Menge ethanolischer Natronlauge führt zur Ausfällung von NaCI, welches über eine Drucknutsche abfiltriert werden kann. Überschüssiges Ethanol wird am Rotationsverdampfer abgezogen. Dadurch steigt der Flammpunkt des Produkts.

### Charakterisierung des Produkts (ohne Nachbehandlung)

| | |
|---|---|
| SiO₂ | 43,2 % |
| Viskosität | 4,1 mPa s |
| Hydrolysierbares Chlorid | 163 mg/kg |
| Farbzahl | 15 |
| Freies Ethanol | 0,7 Gew.-% |
| Dichte | 0,995 g/cm³ |

## Patentansprüche

1. Verfahren zur kontinuierlichen Herstellung eines Gemisches von Organoalkoxysiloxanen der allgemeinen Formel I 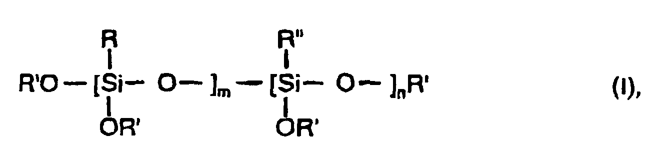 worin Gruppen R und R" gleich oder verschieden sind und Methyl, Ethyl, Vinyl, n-Propyl, i-Propyl, n-Butyl, n-Pentyl, i-Pentyl, n-Hexyl, i-Hexyl, n-Heptyl, i-Heptyl, n-Octyl, i-Octyl, Hexadecyl, Octadecyl oder Alkoxy bedeuten, R' eine Methyl- oder Ethylgruppe darstellt, n und m gleich oder verschieden sind und eine Zahl von 0 bis 20 darstellen, mit der Maßgabe (n+m) ≥ 2,
indem man in einer ersten Verfahrensstufe die Komponenten (i) Organotrichlorsilan oder ein Gemisch aus Organotrichlorsilanen oder ein Gemisch aus mindestens einem Organotrichlorsilan und Tetrachlorsilan, (ii) Wasser und (iii) Alkohol in einem molaren Verhältnis (i): (ii): (iii) von 1 : (0,59 bis 0,95) : (0,5 bis 100) zusammenbringt, bei einer Temperatur von 0 bis 150 °C reagieren läßt, gleichzeitig Chlorwasserstoff aus dem System entfernt und Rohprodukt nach einer mittleren Verweilzeit von 0,5 bis 180 Minuten anteilig in die Reaktions-Destillationskolonne der zweiten Verfahrensstufe überführt, hier flüchtige Komponenten als Kopfprodukt abführt und die Organoalkoxysiloxane als Sumpfprodukt erhält, wobei die Reaktions-Destillationskolonne der zweiten Verfahrensstufe bel einer Sumpftemperatur von 50 bis 200 °C betrieben wird und die Organosiloxane einen mittleren Oligomerisierungsgrad von 2 bis 30 aufweisen.

2. Verfahren nach Anspruch 1,
**dadurch gekennzeichnet,**
**daß** man als Organotrichlorsilan Methyltrichlorsilan, Vinyltrichlorsilan, Ethyltrichlorsilan, n-Propyltrichlorsilan, i-Propyltrichlorsilan, n-Butyltrichlorsilan, Pentyltrichlorsilan, Hexyltrichlorsilan, Heptyltrichlorsilan, n-Octyltrichlorsilan, i-Octyltrichlorsilan, Hexadecyltrichlorsilan oder Octadecyltrichlorsilan einsetzt.

3. Verfahren nach Anspruch 1 oder 2,
**dadurch gekennzeichnet,**
**daß** man als Alkohol (iii) Methanol oder Ethanol einsetzt.

4. Verfahren nach einem der Ansprüche 1 bis 3,
**dadurch gekennzeichnet,**
**daß** man die Komponenten (i), (ii) und (iii) in einem molaren Verhältnis von 1 : (≥ 0,6 bis 0,9): (1 bis 3) einsetzt.

5. Verfahren nach einem der Ansprüche 1 bis 4,
**dadurch gekennzeichnet,**
**daß** man anteilig Rohprodukt nach einer mittleren Verweilzeit von 1 bis 60 Minuten aus der ersten Verfahrensstufe in die Reaktions-Destillationskolonne der zweiten Verfahrensstufe überführt.

6. Verfahren nach einem der Ansprüche 1 bis 5,
**dadurch gekennzeichnet,**
**daß** man das Rohprodukt aus der ersten Verfahrensstufe vor Eintritt in die zweite Verfahrensstufe über einen Vorwärmer führt.

7. Verfahren nach einem der Ansprüche 1 bis 6,
**dadurch gekennzeichnet,**
**daß** man das Rohprodukt aus der ersten Verfahrensstufe der oberen Hälfte der Reaktions-Destillationskolonne zuführt.

8. Verfahren nach einem der Ansprüche 1 bis 7,
**dadurch gekennzeichnet,**
**daß** man in den unteren Teil der Reaktions-Destillationskolonne der zweiten Verfahrensstufe zusätzlich Alkohol in einem molaren Verhältnis der Komponenten (i) : (iii) von 1 : (0,1 bis 100) einspeist.

9. Verfahren nach einem der Ansprüche 1 bis 7,
**dadurch gekennzeichnet,**
**daß** man die in der zweiten Verfahrensstufe am Kolonnenkopf anfallende Alkoholfraktion nach Kondensation in die Reaktions-Destillationskolonne der zweiten Verfahrensstufe und/oder in die erste Verfahrensstufe zurückführt.

10. Gemisch linearer, cyclischer und/oder netzartiger Organoalkoxysiloxane gemäß Formel I, erhältlich nach mindestens einem der Ansprüche 1 bis 9.

11. Verwendung eines Gemischs von Organoalkoxysiloxanen nach Anspruch 10 oder hergestellt nach einem der Ansprüche 1 bis 9 als Konzentrat, in verdünnter Form, in emulgierter Form oder in Mitteln für die Behandlung von anorganischen Oberflächen.

12. Verwendung nach Anspruch 11 für die Behandlung einer anorganischen Oberfläche, für die wasser-, öl-, schmutz- und/oder farbabweisende oder korrosionverhindernde oder haftvermittelnde Ausstattung von Metall, Keramik, Kunststein, Glas, Baustoffen, Bauteilen und Bauwerken, für die Hydrophobierung und Oberflächenmodifizierung von Textilien, Leder, Zellulose- und Stärkeprodukten, für die Beschichtung von Glas- und Mineralfasern, als Bindemittel, als Zusatz zu Bindemittel, für die Oberflächenmodifizierung von Füllstoffen, für die Verbesserung der rheologischen Eigenschaften von Dispersionen und Emulsionen, als Haftvermittler, als Trennmittel, als Vernetzer sowie als Zusatzstoff für Farben und Lacke.

## Claims

1. A process for continuously preparing a mixture of organoalkoxysiloxanes of the general formula I 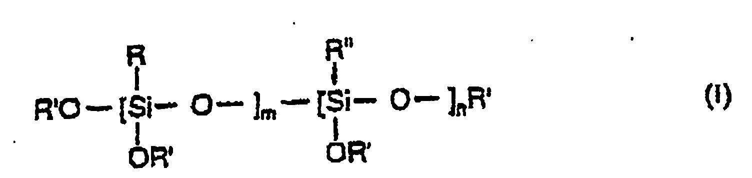 in which R and R" are the same or different and are each methyl, ethyl, vinyl, n-propyl, i-propyl, n-butyl, n-pentyl, i-pentyl, n-hexyl, i-hexyl, n-heptyl, i-heptyl, n-octyl, i-octyl, hexadecyl, octadecyl or alkoxy, R' is a methyl or ethyl group, n and m are the same or different and are each from 0 to 20, with the proviso that (n+m) ≥ 2,
by, in a first process stage, combining the components (i) organotrichlorosilane or a mixture of organotrichlorosilanes or a mixture of at least one organotrichlorosilane and tetrachlorosilane, (ii) water and (iii) alcohol in a molar (i):(ii):(iii) ratio of 1: (0.59 to 0.95): (0.5 to 100), allowing them to react at a temperature of 0 to 150°C, simultaneously removing hydrogen chloride from the system and transferring crude product, after a mean residence time of 0.5 to 180 minutes, partly into the reaction distillation column of the second process stage, removing volatile components here as the top product and obtaining the organoalkoxysiloxanes as the bottom product, the reaction distillation column of the second process stage being operated at a bottom temperature of 50 to 200°C and the organosiloxanes having a mean degree of oligomerization of 2 to 30.

2. A process according to claim 1, **characterized in that** the organotrichlorosilane used is methyltrichlorosilane, vinyltrichlorosilane, ethyltrichlorosilane, n-propyltrichlorosilane, i-propyltrichlorosilane, n-butyltrichlorosilane, pentyltrichlorosilane, hexyltrichlorosilane, heptyltrichlorosilane, n-octyltrichlorosilane, i-octyltrichlorosilane, hexadecyltrichlorosilane or octadecyltrichlorosilane.

3. A process according to claim 1 or 2, **characterized in that**
the alcohol (iii) used is methanol or ethanol.

4. A process according to any one of claims 1 to 3,
**characterized in that**
components (i), (ii) and (iii) are used in a molar ratio of 1: (≥ 0.6 to 0.9) : (1 to 3).

5. A process according to any one of claims 1 to 4,
**characterized in that**
part of the crude product is transferred from the first process stage into the reaction distillation column of the second process stage after a mean residence time of 1 to 60 minutes.

6. A process according to any one of claims 1 to 5, **characterized in that**
the crude product from the first process stage is conducted through a preheater before entry into the second process stage.

7. A process according to any one of claims 1 to 6,
**characterized in that**
the crude product from the first process stage is fed to the upper half of the reaction distillation column.

8. A process according to any one of claims 1 to 7,
**characterized in that**
alcohol is additionally fed into the lower section of the reaction distillation column of the second process stage in a molar ratio of components (i) : (iii) of 1: (0.1 to 100).

9. A process according to any one of claims 1 to 7,
**characterized in that**
the alcohol fraction obtained at the top of the column in the second process stage is, after condensation, recycled into the reaction distillation column of the second process stage and/or into the first process stage.

10. A mixture of linear, cyclic and/or network-like organoalkoxysiloxanes of formula I, obtainable according to at least one of claims 1 to 9.

11. The use of a mixture of organoalkoxysiloxanes according to claim 10, or prepared according to any one of claims 1 to 9, as a concentrate, in dilute form, in emulsified form or in compositions, for the treatment of inorganic surfaces.

12. The use according to claim 11 for the treatment of an inorganic surface, for the water-, oil-, soil- and/or dye-repellent or corrosion-inhibiting or adhesion-promoting modification of metal, ceramic, synthetic stone, glass, building materials, building components and built structures, for the hydrophobization and surface modification of textiles, leather, cellulose and starch products, for the coating of glass and mineral fibres, as a binder, as an additive to a binder, for the surface modification of fillers, for the improvement of the rheological properties of dispersions and emulsions, as an adhesion promoter, as a release agent, as a crosslinker and as an additive for dyes and coating compositions.

## Revendications

1. Procédé de fabrication continue d'un mélange d'organoalcoxysiloxanes de formule générale I 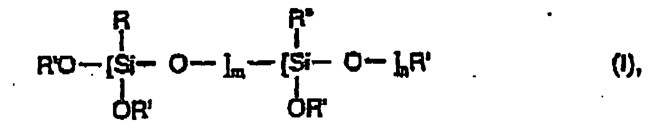 dans laquelle les groupes R et R" sont identiques ou différents et représentent un groupe méthyle, éthyle, vinyle, n-propyle, i-propyle, n-butyle, n-pentyle, i-pentyle, n-hexyle, i-hexyle, n-heptyle, i-heptyle, n-octyle, i-octyle, hexadécyle, octadécyle ou alcoxy, R' un groupe méthyle ou éthyle, n et m sont identiques ou différents et représentent un nombre de 0 à 20, étant précisé que (n+m) ≥ 2,
en réunissant, dans une première étape, les composants (i) organotrichlorosilane ou un mélange d'organotrichlorosilanes ou un mélange d'au moins un organotrichlorosilane et de tétrachlorosilane, (ii) eau et (iii) alcool dans un rapport molaire (i):(ii):(iii) de 1:(0,59 à 0,95):(0,5 à 100), en faisant réagir à une température de 0 à 150°C, en éliminant en même temps le gaz hydrochlorique du système et en transférant proportionnellement le produit brut, après un temps de séjour moyen de 0,5 à 180 minutes, dans une colonne de distillation réactive de la deuxième étape, en y évacuant les composants volatils en tant que produit de tête et en obtenant les organoalcoxysiloxanes en tant que produit de pot, la colonne de distillation réactive de la deuxième étape fonctionnant à une température de pot de 50 à 200°C et les organosiloxanes présentant un taux d'oligomérisation moyen de 2 à 30.

2. Procédé selon la revendication 1,
**caractérisé en ce qu'**
on utilise, comme organotrichlorosilane, du méthyltrichlorosilane, du vinyltrichlorosilane, de l'éthyltrichlorosilane, du n-propyltrichlorosilane, du i-propyltrichlorosilane, du n-butyltrichlorosilane, du pentyltrichlorosilane, de l'hexyltrichlorosilane, de l'heptyltrichlorosilane, du n-octyltrichlorosilane, du i-octyltrichlorosilane, de l'hexadécyltrichlorosilane ou de l'octadécyltrichlorosilane.

3. Procédé selon la revendication 1 ou 2,
**caractérisé en ce que**
comme alcool (iii) on utilise du méthanol ou de l'éthanol.

4. Procédé selon l'une quelconque des revendications 1 à 3,
**caractérisé en ce qu'**
on utilise les composants (i), (ii) et (iii) dans un rapport molaire de 1:(≥ 0,6 à 0,9):(1 à 3).

5. Procédé selon l'une quelconque des revendications 1 à 4,
**caractérisé en ce qu'**
on transfère proportionnellement du produit brut, depuis la première étape, dans la colonne de distillation réactive de la deuxième étape après un temps de séjour moyen de 1 à 60 minutes.

6. Procédé selon l'une quelconque des revendications 1 à 5,
**caractérisé en ce qu'**
on fait passer le produit brut de la première étape par un préchauffeur avant l'entrée dans la deuxième étape.

7. Procédé selon l'une quelconque des revendications 1 à 6,
**caractérisé en ce qu'**
on amène le produit brut de la première étape dans la moitié supérieure de la colonne de distillation réactive.

8. Procédé selon l'une quelconque des revendications 1 à 7,
**caractérisé en ce qu'**
en outre on apporte de l'alcool dans un rapport molaire des composants (i):(iii) de 1:(0,1 à 100) dans la partie inférieure de la colonne de distillation réactive de la deuxième étape.

9. Procédé selon l'une quelconque des revendications 1 à 7,
**caractérisé en ce qu'**
on recycle, après condensation, la fraction alcool apparaissant sur la tête de colonne lors de la deuxième étape dans la colonne de distillation réactive de la deuxième étape et/ou dans la première étape.

10. Mélange d'organoalcoxysiloxanes linéaires, cycliques et/ou réticulés selon la formule I, pouvant être obtenus selon au moins l'une quelconque des revendications 1 à 9.

11. Utilisation d'un mélange d'organoalcoxysiloxanes selon la revendication 10 ou préparés selon l'une quelconque des revendications 1 à 9 en tant que concentré, sous forme diluée, sous forme émulsifiée ou dans des agents pour le traitement de surfaces inorganiques.

12. Utilisation selon la revendication 11 pour le traitement d'une surface inorganique, pour l'équipement hydrophobe, oléophobe, antisalissure et/ou anti-peinture ou anticorrosion ou adhésif des métaux, de la céramique, du grès, du verre, des matériaux de construction et des ouvrages, pour l'hydrophobation et la modification de la surface de textiles, du cuir, de produits en cellulose ou en amidon, pour le revêtement de fibres de verre et minérales, en tant que liant, en tant qu'additif à des liants, pour la modification de la surface de charges, pour l'amélioration de propriétés rhéologiques de dispersions et d'émulsions, en tant qu'adhésif, en tant qu'agent de séparation, en tant que réticulant et en tant qu'additif pour les peintures et les vernis.
